# EUROPÄISCHE PATENTANMELDUNG

(11) **EP 1 318 067 A2**
(43) Veröffentlichungstag der Anmeldung: **11.06.2003**
(21) Anmeldenummer: 02025762.2
(22) Anmeldetag: 16.11.2002
(51) Int. Cl.: B62D 55/30, B62D 55/108

(54) **Kettenlaufwerk für ein Kettenfahrzeug**

(30) Priorität: 07.12.2001 DE 10160918
(71) Anmelder: Kässbohrer Geländefahrzeug AG, 88471 Laupheim (DE)
(72) Erfinder: Kanzler, Helmut, 89269 Vöhringen (DE); Kuhn, Michael, 88480 Laupheim (DE); Junginger, Bernd, 89134 Blaustein (DE)
(74) Vertreter: Patentanwälte Ruff, Wilhelm, Beier, Dauster & Partner

(57) **Zusammenfassung**

Ein Kettenlaufwerk für ein Kettenfahrzeug mit zwei Laufwerksseiten, die jeweils eine umlaufende, über mehrere Räder geführte Kette aufweisen, ist bekannt.Erfindungsgemäß ist vorgesehen, daß wenigstens zwei benachbarte Räder (5 bis 7) an jeweils einem Pendelfortsatz (11, 12, 19) drehbeweglich gelagert sind, und daß beide Pendelfortsätze (11, 12, 19) um eine gemeinsame, zu den Drehachsen der Räder (5 bis 7) parallele Schwenkachse (10, 10a) fahrzeugseitig schwenkbeweglich gelagert sind.

## Beschreibung

Die Erfindung betrifft ein Kettenlaufwerk für ein Kettenfahrzeug mit zwei Laufwerksseiten, die jeweils eine umlaufende, über mehrere Räder geführte Kette aufweisen.

Ein Kettenlaufwerk für ein Kettenfahrzeug in Form eines Schneepisten-Pflegefahrzeugs ist allgemein bekannt. Das Kettenlaufwerk ist Teil eines Fahrwerks und weist auf gegenüberliegenden Fahrzeugseiten jeweils eine Laufwerksseite auf. Jeder Laufwerksseite ist ein Turasrad als Antriebsrad zugeordnet, das vorzugsweise von einer Antriebshydraulik angetrieben ist. Jeder Kette sind zudem mehrere Laufräder zugeordnet, die die Führung der Kette übernehmen. Wenigstens ein Rad ist als Spannrad ausgeführt, in dem es derart relativ zur Kette verstellbar ist, dass eine Veränderung der Kettenspannung erzielbar ist.

Aufgabe der Erfindung ist es, ein Kettenlaufwerk der eingangs genannten Art zu schaffen, das für ein Kettenfahrzeug einen verbesserten Fahrkomfort ermöglicht.

Diese Aufgabe wird dadurch gelöst, dass wenigstens zwei benachbarte Räder an jeweils einem Pendelfortsatz drehbeweglich gelagert sind, und dass beide Pendelfortsätze um eine gemeinsame, zu den Drehachsen der Räder parallele Schwenkachse fahrzeugseitig schwenkbeweglich gelagert sind. Durch die erhöhte Beweglichkeit von wenigstens einem Räderpaar ist ein verbesserter Fahrkomfort erzielbar. Insbesondere ist eine bessere Fahrzeugfederung ermöglicht.

In Ausgestaltung der Erfindung sind beide Pendelfortsätze relativ zueinander winkelbeweglich gelagert. Die Pendelfortsätze können somit relativ zueinander spreizbar oder enger zusammenführbar sein.

In weiterer Ausgestaltung der Erfindung sind wenigstens einem Pendelfortsatz elastische Rückstellmittel zugeordnet, die bei dynamischen Auslenkungen des wenigstens einen Pendelfortsatzes ein Rückstellmoment in einen statischen Ruhezustand aufbringen. Dadurch wird mit einfachen Mitteln eine Doppelfunktion erzielt. Zum einen wird durch die schwenkbewegliche Lagerung der Pendelfortsätze eine insbesondere vertikale Wippbewegung des Fahrwerks und damit des Kettenfahrzeugs erreicht. Zum anderen wird über elastische Rückstellmittel eine Federwirkung erzielt.

In weiterer Ausgestaltung der Erfindung weist die Schwenklagerung der Pendelfortsätze ein dem einen Pendelfortsatz zugeordnetes, äußeres polygonales Hohlprofil sowie ein in dem äußeren Hohlprofil integriertes Polygonalprofil auf, das dem anderen Pendelfortsatz zugeordnet ist, und das einen gegenüber einem Innenquerschnitt des äußeren Hohlprofils derart reduzierten Außenquerschnitt aufweist, dass zwischen dem äußeren Hohlprofil und dem inneren Polygonalprofil ein Freiraum verbleibt, der zumindest weitgehend durch wenigstens einen Elastomerkörper ausgefüllt ist. Bei einer Verdrehung des inneren Polygonalprofiles relativ zu dem umgebenden, äußeren Hohlprofil wird somit der Elastomerkörper zwangsläufig zusammengedrückt und bewirkt somit in Richtung des unbelasteten Ruhezustandes ein Rückstellmoment. Vorzugsweise ist das innere Polygonalprofil wie auch das äußere Hohlprofil jeweils dreioder viereckig gestaltet. Je weiter die entsprechende polygonale Form sich von einem Kreis entfernt, desto größer können die Rückstellmomente des wenigstens einen Elastomerkörpers ausfallen. Durch diese Ausgestaltung wird eine besonders vorteilhafte Federung erzielt, da die Elastomerkörper wie auch das innere Polygonalprofil innerhalb des äußeren Hohlprofils integriert und vollkommen geschützt angeordnet sind. Durch die integrierte Anordnung wird zudem ein lediglich geringer Bauraum benötigt. In vorteilhafter Weise sind mehrere Elastomerkörper jeweils in den Eckbereichen des ringförmigen Freiraumes vorgesehen. Das Vorsehen von mehreren Elastomerkörpern, die unabhängig voneinander hergestellt sind, erlaubt eine vereinfachte Montage der Gesamtanordnung. Zudem ist es in äußerst einfacher Weise möglich, bei einem Verschleiß den oder die Elastomerkörper auszutauschen. In besonders vorteilhafter Weise ist als inneres Polygonalprofil ein Vierkantprofil mit quadratischem Querschnitt und als äußeres Hohlprofil ein weiteres Vierkantprofil mit ebenfalls quadratischem Querschnitt vorgesehen, wobei das innere Hohlprofil mit seinen Ecken um 45° um die Schwenkachse verdreht zu dem äußeren Hohlprofil positioniert ist. Dadurch ist es möglich, in die entstandenen Eckbereiche des Freiraumes vier Elastomerkörper einzufügen. Die Elastomerkörper sind in unbelastetem Zustand vorzugsweise zylindrisch. Vorzugsweise werden die Elastomerkörper eingepresst, so dass bereits im unbelasteten Ruhezustand eine Klemmwirkung entsteht, die eine Vorspannung und spielfreie Positionierung des inneren Polygonalprofiles im äußeren Hohlprofil gewährleistet. In eingepresstem Zustand besitzen die Elastomerkörper etwa dreieckförmigen Querschnitt.

In weiterer Ausgestaltung der Erfindung ist das Kettenlaufwerk als Trapezkettenlaufwerk ausgeführt, bei dem eines der Räder als Laufrad und das andere als Spannrad gestaltet sind, und es sind Spannmittel vorgesehen, die wenigstens im Betrieb des Trapezkettenlaufwerkes die Pendelfortsätze zu einem gemeinsamen Spannpendel miteinander verbinden. Durch die Spannmittel wird eine starre Zuordnung zwischen den Pendelfortsätzen erzielt. Die Pendelfortsätze können somit keine Winkelbewegungen relativ zueinander durchführen. Dadurch wird der Fahrkomfort des Kettenfahrzeugs erheblich verbessert. Die Kräfteverhältnisse zwischen Spannrad und Laufrad sind durch Wahl der Lenkergeometrie, d.h. durch Gestaltung der Pendelfortsätze, frei wählbar. Durch die erfindungsgemäße Ausgestaltung kann das Vorsehen eines dynamischen Kettenspanners vermieden werden. Durch das geschaffene Spannpendel, das sich vorzugsweise im vorderen, schräg ansteigenden Kettentrumbereich befindet, wird zum einen auch bei Wipp- oder Federbewegungen der Räder eine gleichbleibende Kettenspannung aufrechterhalten. Zum anderen wird das Einnicken des Kettenfahrzeugs bei einem Bremsvorgang erheblich reduziert. Die Besonderheit eines Trapezkettenlaufwerkes ist es, dass der in normaler Fahrtrichtung vordere Kettentrumbereich jeder Laufwerksseite schräg nach vorne und nach oben ansteigt. Gleiches gilt regelmäßig für den rückseitigen Endbereich der Ketten beider Laufwerksseiten, so dass sich insgesamt für jede Kette in einer Seitenansicht eine trapezähnliche Form ergibt. Durch ein Trapezkettenlaufwerk sind für ein Kettenfahrzeug ausgezeichnete Klettereigenschaften erzielbar. Es können auch größere Hindernisse überfahren werden, die bei herkömmlichen Kettenfahrzeugen mit einer Rechteckgeometrie des Kettenlaufwerkes nicht mehr befahrbar sind. Wesentliches Merkmal des Trapezkettenlaufwerkes ist es, dass die vorderste Achse des Kettenlaufwerkes auf beiden Laufwerksseiten nach oben versetzte Räder aufweist. Beim vorliegenden Ausführungsbeispiel sind dies die Spannräder des Spannpendels. Vorteilhaft bewirkt ein Ein- oder Ausfedern des vordersten Laufrades, d.h. des Spannrades eine sofortige Ausgleichbewegung ohne Zeitverzögerung. Durch die pendelnd gelagerten Laufräder wird vorteilhaft ein Radlastausgleich erzielt. Die Pendelbewegung und eine Einfederung, d.h. ein Ein- oder Auswippen, überlagern einander.

In weiterer Ausgestaltung der Erfindung weisen die Spannmittel Justiermittel auf, mittels derer eine Verstellung des Abstandes der Drehachsen von Spannrad und benachbartem Laufrad zueinander durchführbar ist. Durch die Justiermittel ist die Kettenspannung einstellbar. Dies erfolgt vorzugsweise vor Inbetriebnahme des Kettenfahrzeugs. Als Justiermittel kann eine Gewindespindel, eine Hydraulik- oder eine Pneumatikeinheit oder ein anders gestaltetes Stellglied vorgesehen sein. Es ist auch möglich, eine Verstellung während des Fahrbetriebs durchzuführen, indem das entsprechende Stellglied in geeigneter Weise angesteuert wird.

Weitere Vorteile und Merkmale der Erfindung ergeben sich aus der nachfolgenden Beschreibung eines bevorzugten Ausführungsbeispiels der Erfindung, das anhand der Zeichnungen dargestellt ist.
- Fig. 1: zeigt ein Kettenfahrzeug mit einer Ausführungsform eines erfindungsgemäßen Kettenlaufwerkes,
- Fig. 2 bis 4: schematisch das Kettenlaufwerk nach Fig. 1 in unterschiedlichen Laufsituationen,
- Fig. 5: in vergrößerter Darstellung einen Ausschnitt des Kettenlaufwerks nach den Fig. 1 bis 4 in einem vorderen Laufachsbereich,
- Fig. 6: schematisch eine weitere Ansicht des Spannpendels nach Fig. 5,
- Fig. 7: ein als Laufpendel gestaltetes Laufradpaar des Kettenlaufwerkes nach den Fig. 1 bis 4 und
- Fig. 8: in einer Schnittdarstellung das Laufpendel nach Fig. 7.

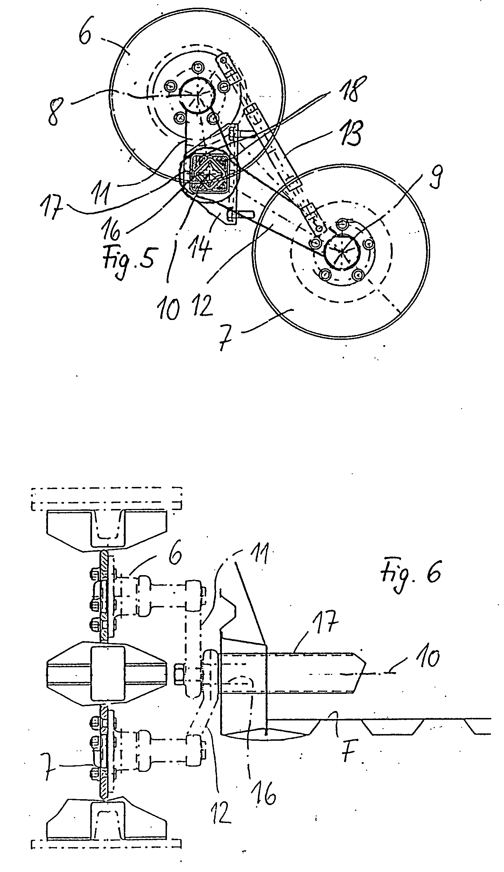

Ein Kettenfahrzeug 1 nach Fig. 1 weist ein Kettenlaufwerk in Form eines Trapezkettenlaufwerkes 2 auf. Das Trapezkettenlaufwerk 2 ist auf jeder Laufwerksseite mit jeweils einer, über mehrere Räder 4 bis 7 umlaufenden Kette 3 versehen. Beide Laufwerksseiten sind identisch gestaltet. Jede Kette 3 ist durch jeweils ein Turasrad 4 angetrieben. Dieses Turasrad 4 auf jeder Fahrzeugseite steht mit einer Antriebshydraulik in Verbindung, auf die an dieser Stelle nicht näher eingegangen wird. Die beiden Antriebsräder 4 auf beiden Fahrzeugseiten stellen die - in Fahrtrichtung gesehen - letzte Radachse dar. Den beiden Ketten 3 auf beiden Fahrzeugseiten sind noch sechs weitere Radachsen zugeordnet. Die - in Fahrtrichtung gesehen - vordere Radachse wird für jede Kette 3 durch jeweils ein Rad 6 gebildet, das gegenüber den Achsen der Räder 5 und 7 nach vorne und nach oben versetzt relativ zu einem befahrenen Untergrund positioniert ist. Hierdurch ergibt sich ein in etwa trapezartiger Umlauf jeder Kette 3.

Bei dem Trapezkettenlaufwerk 2 gemäß den Fig. 1 bis 8 ist auf jeder Laufwerkseite neben dem alleinstehenden, rückseitigen Turasrad 4 jeweils eine paarweise Anordnung der übrigen Räder 5 bis 7 vorgesehen, wie nachfolgend näher beschrieben wird.

Die Räder 6, 7 an den beiden vorderen Radachsen bilden in nachfolgend näher beschriebener Weise gemeinsam ein Spannpendel. Die vier Laufräder 5, die die Kette bis zum Turasrad 4 im Aufstandsbereich der Kette 3 führen, sind paarweise zu zwei Laufpendeln zusammengefügt.

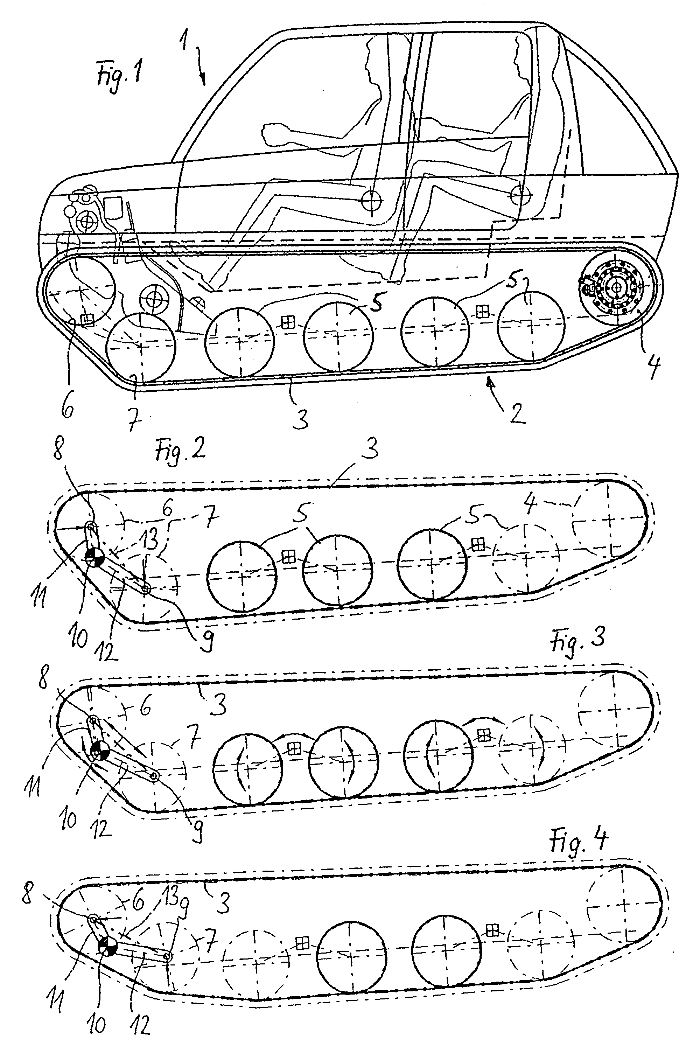

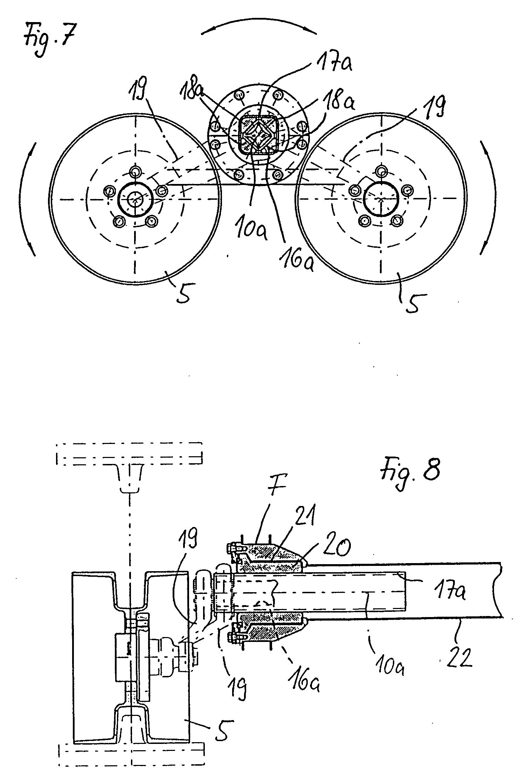

Aufbau und Funktion des Spannpendels sind anhand der Fig. 2 bis 6 nachfolgend näher beschrieben. Aufbau und Funktion des Laufpendels werden anschließend anhand der Fig. 7 und 8 beschrieben.

Die Räder 6 und 7 der vordersten und der zweitvordersten Radachse sind an jeweils einem Pendelfortsatz 11, 12 um jeweils eine Drehachse 8, 9 drehbar gelagert. Jeder Pendelfortsatz 11, 12 ist als Lenkerhebel gestaltet. Beide Pendelfortsätze 11, 12 sind um eine gemeinsame Schwenkachse 10 an einem Fahrzeugrahmen F (Fig. 6) schwenkbeweglich gelagert. Der Abstand der Drehachse 8 des oberen und vorderen Rades 6 zur Schwenkachse 10 entspricht etwa der Hälfte des Abstandes der Drehachse 9 des unteren und hinteren Rades 7 von der Schwenkachse 10. Demzufolge weist der Pendelfortsatz 11 etwa die halbe Länge des Pendelfortsatzes 12 auf. Der kurze Pendelfortsatz 11 ist um die Schwenkachse 10 gemäß Fig. 6 frei schwenkbar. Der untere Pendelfortsatz 12 ist insbesondere durch Verschweißung fest mit einem inneren Polygonalprofil 16 einer Schwenklagerung beider Pendelfortsätze 11, 12 verbunden. Das Polygonalprofil, vorliegend in Form eines Vierkantprofils, ist in einem polygonalen Hohlprofil, vorliegend in einem Vierkanthohlprofil integriert, wobei das innere Polygonalprofil 16 in dem äußeren Hohlprofil 17 mit Hilfe von im Querschnitt im eingepressten Zustand etwa dreieckförmigen Elastomerkörpern 18 in einer um 45° zum Hohlprofil 17 verdrehten Position gehalten ist. Das äußere Hohlprofil 17 ist formschlüssig mittels eines Halteflansches 14 rahmenfest gesichert, der mit dem Fahrzeugrahmen F, vorliegend durch Verschraubung, fest verbunden ist.

Die vier Elastomerkörper 18 stellen Rückstellmittel für den Pendelfortsatz 12 dar, die den Pendelfortsatz in einer unbelasteten, statischen Ruhestellung halten und bei einer Verdrehung des Pendelfortsatzes 12 um die Schwenkachse 10 auf diesen ein Rückstellmoment hin zur statischen Ruhelage ausüben.

Die beiden Räder 6, 7 wirken als gemeinsames Spannpendel. Hierzu ist eine starre Verbindung zwischen den Pendelfortsätzen 11, 12 vorgesehen, die durch ein Spannmittel in Form eines Linearstellgliedes 13 gebildet ist. Das Linearstellglied 13 ist mit einem Ende im Bereich des unteren Pendelfortsatzes 12 und mit seinem anderen, innenliegenden Ende im Bereich eines Flansches des oberen Pendelfortsatzes 11 angelenkt. Das Linearstellglied 13 ist vorliegend als Gewindespindel gestaltet. Durch entsprechende Verstellung des Linearstellgliedes 13 ist der Abstand der Drehachsen 8 und 9 beider Räder 6, 7 zueinander veränderbar. Da die Anlenkpunkte des Linearstellgliedes 13 an den beiden Pendelfortsätzen 11 und 12 mit der Schwenkachse ein Dreieck bilden, führt eine Veränderung der Länge des Linearstellgliedes 13 zwangsläufig zu einer Winkeländerung zwischen den Schenkeln des Dreiecks, d.h. den Pendelfortsätzen 11 und 12.

Das untere Rad 7 dient als Laufrad. Das obere Rad 6 dient als Spannrad. Durch eine Veränderung des Winkels der beiden Pendelfortsätze 11, 12 relativ zueinander ist die Kettenspannung der Kette 3 einstellbar. Sobald im Fahrbetrieb das Kettenfahrzeug 1 sich in der Zeichenebene nach links bewegt, wird je nach befahrenem Untergrund und je nach Beschleunigung oder Verzögerung des Kettenfahrzeugs 1 das Laufrad 7 des Spannpendels ein- oder ausgefedert. In Fig. 3 ist der statische Zustand des Kettenlaufwerkes dargestellt, in der das Spannpendel durch die Elastomerkörper 18 in seiner unbelasteten Ruhestellung gehalten ist. In Fig. 2 ist das vordere Laufrad 7 nach unten ausgefedert. In Fig. 4 ist es nach oben eingefedert.

Das Spannrad 6 spannt die Kette 3 durch entsprechende Verdrehung des Linearstellgliedes 13, das als Spannkinematik dient. Nach dem Spannen der Kette 3 bilden die Pendelfortsätze 11 und 12 zusammen mit dem Linearstellglied 13 eine starre Einheit, so dass das gemeinsame Spannpendel gebildet ist.

In nicht näher dargestellter Weise ist eine Überlastsicherung vorgesehen, die als Überdruckventil bei einem hydraulischen Linearstellglied 13 oder als Federabsicherung im Bereich der Schwenklagerung gestaltet sein kann. Bei einer Auslenkung des Spannpendels aus dem statischen Zustand, d.h. bei einer Ein- oder Ausfederung des Laufrades 7, wird das Polygonalprofil 16 in dem Hohlprofil 17 verdreht, wodurch die Elastomerkörper 18 in Umfangsrichtung komprimiert werden. Diese bewirken ein Rückstellmoment in entgegengesetzter Umfangsrichtung, so dass nach Wegnahme der dynamischen Belastung eine erneute Ausrichtung in den statischen Zustand erfolgen wird.

Gemäß den Fig. 1 bis 4 und 7, 8 werden für die vier mittleren Laufradachsen zwei Laufpendel durch paarweise Zuordnung von jeweils zwei Laufrädern 5 gebildet. Beide Laufpendel jeder Laufwerksseite sind identisch ausgebildet, so dass die nachfolgende Beschreibung für beide, in Fahrzeuglängsrichtung hintereinander angeordneten Laufpendel gilt. Wie bei dem Spannpendel sind auch bei dem Laufpendel beide Laufräder 5 an jeweils einem Pendelfortsatz 19 drehbeweglich gelagert. Beide Pendelfortsätze 19 sind identisch ausgeführt, so dass die Drehachsen der beiden Laufräder 5 den gleichem Abstand zu einer Schwenkachse 10a aufweisen. Geometrisch gesehen bilden somit die Drehachsen der beiden Laufräder 5 und die zentrale Schwenklagerung 10a ein gleichschenkliges Dreieck, wie anhand der Fig. 7 erkennbar ist. Beide Pendelfortsätze 19 sind um die Schwenkachse 10a fahrzeugseitig am Fahrwerksrahmen F schwenkbeweglich gelagert. Die beiden Pendelfortsätze 19 stehen im Bereich der Schwenklagerung durch elastische Rückstellmittel miteinander in Verbindung. Der eine Pendelfortsatz 19 ist fest mit einem inneren Polygonalprofil 16a und der andere Pendelfortsatz 19 mit einem äußeren Polygonalprofil 17a fest verbunden. Die beiden Profile 16a und 17a sind analog dem zuvor beschriebenen Spannpendel gestaltet. In dem Freiraum zwischen dem inneren Polygonalprofil 16a und dem äußeren Hohlprofil 17a sind vier Elastomerkörper 18a als Rückstellmittel positioniert, die den Elastomerkörpern 18 des Spannpendels nach den Fig. 5 und 6 entsprechen. Wesentlicher Unterschied des Laufpendels ist es, dass das äußere Hohlprofil 17a mittels einer Lagerhülse 20 und einer Gleitlagerung 21 in dem Fahrzeugrahmen F um die Schwenkachse drehbeweglich gelagert ist. Ein innerer Endbereich des Hohlprofils 17a ragt in ein Hohlprofil eines Achsquerträgers 22 hinein, der Teil des starren Fahrwerkrahmens F ist.

Durch diese Konstruktion sind beide Laufräder 5 pendelnd gelagert, wodurch sich ein Radlastausgleich zwischen den pendelnd gelagerten Laufrädern 5 ergibt. Durch die Elastomerkörper 18a bilden die beiden Pendelfortsätze 19 im statischen Zustand eine stabile Einheit, so dass beide Laufräder 5 um die Schwenkachse 10a als gemeinsames Laufpendel pendelnd beweglich sind. Zudem ist ein im wesentlichen vertikales Ein- und Ausfedern ermöglicht, indem die beiden Pendelfortsätze 19 aus ihrem statischen Zustand ausgelenkt werden. Vorzugsweise spreizen die Pendelfortsätze 19 sich relativ zueinander bei entsprechenden Belastungen. Das Laufpendel kann somit zum einen um die Schwenkachse 10a wippen und zum anderen in einer Hochbewegung ein- oder ausfedern.

Das erfindungsgemäße Kettenfahrzeug eignet sich insbesondere für eine Straßenzulassung.

## Patentansprüche

1. Kettenlaufwerk für ein Kettenfahrzeug mit zwei Laufwerksseiten, die jeweils eine umlaufende, über mehrere Räder geführte Kette aufweisen, **dadurch gekennzeichnet, dass** wenigstens zwei benachbarte Räder (5 bis 7) an jeweils einem Pendelfortsatz (11, 12, 19) drehbeweglich gelagert sind, und dass beide Pendelfortsätze (11, 12, 19) um eine gemeinsame, zu den Drehachsen der Räder (5 bis 7) parallele Schwenkachse (10, 10a) fahrzeugseitig schwenkbeweglich gelagert sind.

2. Kettenlaufwerk nach Anspruch 1, **dadurch gekennzeichnet, dass** beide Pendelfortsätze (19) relativ zueinander winkelbeweglich gelagert sind.

3. Kettenlaufwerk nach Anspruch 1 oder 2, **dadurch gekennzeichnet, dass** den Pendelfortsätzen (11, 12, 19) elastische Rückstellmittel (18, 18a) zugeordnet sind, die bei dynamischen Auslenkungen der Pendelfortsätze (11, 12, 19) ein Rückstellmoment in einen statischen Ruhezustand aufbringen.

4. Kettenlaufwerk nach Anspruch 2 oder 3, **dadurch gekennzeichnet, dass** die Schwenklagerung der Pendelfortsätze (11, 12, 19) ein dem einen Pendelfortsatz (11, 12, 19) zugeordnetes, äußeres polygonales Hohlprofil (17, 17a) sowie ein in dem äußeren Hohlprofil (17, 17a) integriertes Polygonalprofil (16, 16a) aufweist, das dem anderen Pendelfortsatz (11, 12, 19) zugeordnet ist, und das einen gegenüber einem Innenquerschnitt des äußeren Hohlprofiles (17, 17a) derart reduzierten Außenquerschnitt aufweist, dass zwischen dem äußeren Hohlprofil (17, 17a) und dem inneren Polygonalprofil (16, 16a) ein Freiraum verbleibt, der zumindest weitgehend durch wenigstens einen Elastomerkörper (18, 18a) ausgefüllt ist.

5. Kettenlaufwerk nach Anspruch 1, **dadurch gekennzeichnet, dass** das Kettenlaufwerk als Trapezkettenlaufwerk ausgeführt ist, bei dem eines der Räder als Laufrad (7) und das andere als Spannrad (6) gestaltet sind, und dass Spannmittel (13) vorgesehen sind, die wenigstens im Betrieb des Trapezkettenlaufwerkes die Pendelfortsätze (11, 12) zu einem gemeinsamen Spannpendel miteinander verbinden.

6. Kettenlaufwerk nach Anspruch 5, **dadurch gekennzeichnet, dass** die Spannmittel Justiermittel aufweisen, mittels derer eine Verstellung des Abstandes der Drehachsen (8, 9) von Spannrad (6) und benachbartem Laufrad (7) zueinander durchführbar ist.

7. Kettenlaufwerk nach einem der vorhergehenden Ansprüche, **dadurch gekennzeichnet, dass** der Abstand der Drehachsen (8, 9) der Räder (6, 7) zu der gemeinsamen Schwenkachse (10) gleich oder unterschiedlich gestaltet ist.

8. Kettenfahrzeug, **dadurch gekennzeichnet, dass** ein Kettenlaufwerk nach einem der vorhergehenden Ansprüche vorgesehen ist.
